# EUROPÄISCHE PATENTANMELDUNG

(11) **EP 0 562 365 A2**
(43) Veröffentlichungstag der Anmeldung: **29.09.1993**
(21) Anmeldenummer: 93103859.0
(22) Anmeldetag: 10.03.1993
(51) Int. Cl.: C07F 9/11

(54) **Verfahren zur Herstellung von Dialkylphosphorsäuren**

(30) Priorität: 23.03.1992 DE 4209344
(71) Anmelder: BAYER AG, 51368 Leverkusen (DE)
(72) Erfinder: Fröhlen, Hans-Günter, W-5090 Leverkusen 3 (DE); Block, Hans-Dieter, Dr., W-5090 Leverkusen 3 (DE); Moretto, Hans-Heinrich, Dr., W-5090 Leverkusen 1 (DE); Schmidt, Peter, Dr., W-5090 Leverkusen 3 (DE)

(57) **Zusammenfassung**

Die Erfindung betrifft ein Verfahren zur Herstellung von Dialkylphosphorsäuren mit untereinander identischen Alkylresten, die jeweils 6 bis 12 C-Atome aufweisen.

## Beschreibung

Die vorliegende Erfindung betrifft ein Verfahren zur Herstellung von Dialkylphosphorsäuren mit untereinander identischen Alkylresten, die jeweils 6 bis 12 C-Atome aufweisen.

Dialkylphosphorsäuren sind wirksame und vielseitig anwendbare Extraktionsmittel in der Flüssig-Flüssig-Extraktion zur Reinigung, Anreicherung, Abtrennung bzw. Gewinnung von Metallsalzen. Hierfür ist die Di-(2-ethylhexyl)-phosphorsäure besonders gut geeignet.

In Houben-Weyl, Methoden der Organischen Chemie, Band 12/2, 1964, Seite 35, wird die Umesterung von Diethylphosphit mit n-Octanol beschrieben und auf Seite 20 die Veresterung von phosphoriger Säure mit 2-Ethylhexanol. Auf den Seiten 287 und 288 findet man die Chlorierung von Dialkylphosphiten und auf den Seiten 239, 240, 249 und 250 die Hydrolyse von Dialkylchlorphosphaten. Hinweise zur Umesterung von Dialkylphosphiten finden sich außerdem in Zhurnal Obshchei Khimii, Vol. 35, Nr. 1, Seite 35 (1965) und in Houben-Weyl, Ergänzungsband E 1, 1982, Seite 326 ff, und auf Seite 324 ff ist die Veresterung von phosphoriger Säure und von Phosphorigsäuremonoalkylester beschrieben.

In der deutschen Offenlegungsschrift 1 668 031 wird ein Verfahren zur Herstellung von Dialkylphosphiten durch Umsetzung von Alkoholen mit phosphoriger Säure beschrieben.

Weiterhin ist bekannt, Phosphorigsäuremonoalkylester` die einen unerwünschten Alkylrest in Form eines veresterten Alkohols enthalten, in symmetrische Phosphorigsäuredialkylester, die die erwünschten Alkylreste in veresterter Form enthalten, durch Umsetzung mit dem entsprechenden Alkohol zu überführen.

Im Journal für praktische Chemie, Serie 4, 1962, pp. 287 bis 291, ist die Reaktion von Phosphortrichlorid mit Alkoholen, enthaltend 3 bis 10 Kohlenstoff-Atome, wie z.B. 2-Ethylhexanol, zu den entsprechenden Dialkylphosphiten beschrieben. Diese werden isoliert, dann chloriert, das erzeugte Phosphorsäuredialkylesterchlorid isoliert und dann unter alkalischen Bedingungen zum Natriumsalz der Dialkylphosphorsäure hydrolysiert.

In der EP 33 999 werden ebenfalls Dialkylphosphate mit je 8 bis 12 C-Atomen in der Alkylgruppe hergestellt, indem Phosphortrichlorid mit entsprechenden Alkoholen umgesetzt werden.

Nachteil dieser letztgenannten Verfahren ist, daß im ersten Reaktionsschritt neben Dialkylphosphiten mit je 8 bis 12 C-Atomen in der Alkylgruppe gleichzeitig stöchiometrische Mengen an kaum verwertbaren Alkylchloriden mit je 8 bis 12 C-Atomen in der Alkylgruppa anfallen. Somit gehen bei diesen Vorfahren stöchiometrische Mengen an wertvollen Alkoholen mit 8 bis 12 C-Atomen verloren.

Aufgabe war es daher, ein Verfahren zur Verfügung zu stellen, das es gestattet, Diaikylphosphorsäuren herzustellen, ohne daß dabei wertvolle Ausgangsverbindungen verloren gehen oder in Form von wertlosen, zwangsweise auftretenden Nebenprodukten anfallen. Des weiteren sollte das Verfahren einfach und mit hoher Ausbeute an Produkt durchzuführen sein.

Gegenstand der Erfindung ist daher ein Verfahren zur Herstellung von Dialkylphosphorsäuren, deren Alkylreste miteinander identisch sind und jeweils 6 bis 12 C-Atome aufweisen, welches dadurch gekennzeichnet ist, daß
a) phosphorige Säure, Phosphorigsäuremethylester, Phosphorigsäureethylester, Dimethylphosphit, Diethylphosphit oder Gemische davon, mit einem primären Alkohol, ausgewählt aus der Gruppe Hexanol, Oktanol, 2-Ethylhexanol, Dekanol und Dodekanol, im Molverhältnis 1:2,1 bis 1:10, vorzugsweise 1:4 bis 1:6, bei Siedetemperatur unter einem Druck von 0,1 bis 2 bar, vorzugsweise bei Atmosphärendruck umgesetzt werden, bis alles entstandene Wasser, Methanol und/oder Ethanol aus dem Reaktionsgemisch abdestilliert ist,
b) der als Überschuß eingesetzte Alkohol auf weniger als 10 %, vorzugsweise auf weniger als 1 % unter reduziertem Druck destillativ entfernt wird,
c) das von Alkohol befreite, gegebenenfalls destillierte Dialkylphosphit mit Chlorgas bei Temperaturen zwischen -20°C und 50°C bis zum Auftreten eines bleibenden Chlorgehalts in der Mischung, erkennbar an einer gelbgrünen Farbe der Reaktionsmischung oder einem stabilen Redoxpotential von 0,88 bis 0,91 V, umgesetzt wird,
d) der im Reaktionsprodukt gelöste Chlorwasserstoff bei Temperaturen zwischen ca. 20°C und 50°C mit einem inerten Gasstrom ausgeblasen wird,
e) das von Chlorwasserstoff befreite rohe Dialkylchlorphosphat mit Wasser bei Temperaturen zwischen 20°C und 90°C innerhalb von 0,5 bis 2 Stunden so hydrolysiert wird, daß eine nicht mehr als 10 Gew.-% HCl enthaltende wäßrige Salzsäure erzeugt wird, wobei zwei Phasen gebildet werden,
f) von den entstandenen zwei Phasen die untere, im wesentlichen aus Salzsäure bestehende Phase abgetrennt wird,
g) die obere der beiden Phasen 1 bis 6 Stunden bei 80 bis 130°C mit 1,5 bis 200 Gew.-% Wasser behandelt wird und
h) die resultierende Dialkylphosphorsäure durch Phasentrennung isoliert wird und gegebenenfalls noch weiter entwässert wird.

Bevorzugt wird als primärer Alkohol 2-Ethylhexanol eingesetzt.

Das Verfahren wird vorzugsweise kontinuierlich durchgeführt.

Gegebenenfalls kann das entstandene Dialkylphosphit unter vermindertem Druck vor der Chlorierung destilliert werden.

Mit dem erfindungsgemäßen Verfahren werden die Ausgangsverbindungen in praktisch quantitativer Ausbeute umgesetzt. Zudem eignen sich als phosphorhaltige Ausgangsverbindungen auch anderweitig nicht oder nur schwer verwertbare Gemische, die noch zusätzlich Verunreinigungen, wie z.B. Pyrophosphorige Säure und ihre Ester, Wasser, Alkohole und Phosphorsäure, kondensierte Phosphorsäuren und Phosphorigsäure-Phosphorsäure-Cokondensate und ihre Ester (letztere allerdings nur in Mengen bis zu 3 Gew.-%) enthalten. Derartige schwer verwertbare Gemische fallen bei der industriellen Erzeugung von Dimethylphosphit, Diethylphosphit und Monoethylphosphit sowie beispielsweise auch bei der Umwandlung von Carbonsäuren in Carbonsäurechloride mittels Phosphortrichlorid an.

Das Chlorgas wird solange eingeleitet, bis durch die gelbgrüne Färbung des Produktes zu erkennen ist, daß die Reaktion beendet ist. Das Reaktionsende kann auch über das stabile Redoxpotential von 0,88 bis 0,91 V ermittelt werden.

Die Erfindung soll anhand der nachfolgenden Beispiele näher erläutert werden.

### Beispiele

### Beispiel 1

In einer Apparatur, bestehend aus einem 500 ml Dreihalskolben, Rührer, Thermometer, Destillationskolonne und Ölheizbad, werden 55 g (0,5 mol) Dimethylphosphit und 260 g (2 mol) 2-Ethylhexanol vorgelegt und erhitzt. Bei Erreichen von ca. 125°C im Sumpf beginnt die Abspaltung von Methanol. Unter ständiger Erhöhung der Sumpftemperatur wird solange Methanol am Kopf der Kolonne abdestilliert, bis bei einer Temperatur von 196°C im Sumpf alles Methanol entfernt ist. 32 g Destillat werden erhalten, das nach gaschromatographischer Messung zu 99,3 % aus Methanol besteht.

Der als Überschuß eingesetzte 2-Ethylhexyl-alkohol wird anschließend im Vakuum (16 mbar) abgezogen, bis eine Sumpftemperatur von 150°C erreicht ist.

Das von 2-Ethylhexanol weitestgehend befreite Di-(2-ethylhexyl)-phosphit wird bei ca. 20°C solange mit Chlorgas versetzt, bis das Reaktionsprodukt eine bleibende gelb-grüne Färbung angenommen hat. Hierbei wird mit fließendem kalten Wasser von außen gekühlt.

Zwecks Entfernung des im Reaktionsgut gelösten Chlorwasserstoffs leitet man 1 Stunde lang insgesamt 100 l Luft durch das zuvor auf 50°C erwärmte Reaktionsprodukt, das danach noch einen Restgehalt von etwa 1 % an Chlorwasserstoff aufweist.

Dann setzt man dem Produkt 200 ml Wasser zu und tempert unter Rühren Stunden bei 70°C.

Die nach der Phasentrennung acidimetrisch analysierte, untere, wäßrige Phase enthält nahezu die gesamte zu erwartende Menge an Chlorwasserstoff.

Die organische Phase wird erneut mit 200 ml Wasser versetz und weitere 5 Stunden unter Rühren am Rückfluß getempert, dabei stellt sich eine Sumpftemperatur von 115°C ein.

Nach der Phasentrennung wird die obere, organische Phase im Wasserstrahlvakuum bis 130°C entwässert. Als Rückstand verbleiben 156 g (96,9 % der Theorie) am Di-(2-ethylhexyl)-Phosphorsäure, welche geringfügig mit Mono-(2-ethylhexyl)-phosphorsäure (1,6 %) und Tris-(2-ethylhexyl-phosphat (0,3 %) verunreinigt ist.

### Beispeil 2

50 g eines Destillationsrückstandes (Zusammensetzung in Gew.-%: 8,8 % Dimethylphosphit, 38,8 % Monomethylphosphit, 17,7 % phosphorige Säure, 29,5 % Pyrophosphorige Säure, 3,8 % Pyrophosphorigsäuremethylester, 0,5 % Phosphorsäure, 1,1 % Monomethylphosphat) aus der Produktion von Dimethylphosphit werden gemeinsam mit 390 g (3 mol) 2-Ethylhexanol in einem 1 l fassenden Dreihalskolben vorgelegt. Die Apparatur ist wie oben mit Rührer, Thermometer, Tropftrichter, Destillationsbrücke und einem Ölheizbad ausgestattet.

Die Mischung wird unter Rühren erhitzt. Bei Erreichen von 145°C im Sumpf beginnt die Freisetzung eines Destillats, das sich aus Methanol, Wasser und 2-Ethylhexanol zusammensetzt. Bei stetig ansteigender Sumpftemperatur werden die abdestillierten Volumenanteile solange durch frisches 2-Ethylhexanol ersetzt, bis sich am Kopf der Destillationsbrücke die Siedetemperatur des reinen 2-Ethylhexanols eingestellt hat (183°C/1013 mbar). Hierzu werden 350 ml 2-Ethylhexanol benötigt. Die Sumpftemperatur beträgt zu diesem Zeitpunkt 200°C.

Bei einem Druck von 16 mbar wird nun das 2-Ethylhexanol vom Rohprodukt getrennt, das anschließend bei 4 mbar und 165°C über eine Brücke destilliert wird. Man erhält 167 g = 95,7 % der Theorie eines Di-(2-ethylhexyl)-phosphits, das nur noch mit 0,6 % an 2-Ethylhexanol verunreinigt ist. Als Destillationsrückstand verbleiben nur 3,0 g.

Die Weiterverarbeitung des Di-(2-ethylhexyl)-phosphits zur Di-(2-ethylhexyl)-phosphorsäure ist identisch mit der im Beispiel 1 beschriebenen Vorgehensweise; die erreichte Produktqualität entspricht der in Beispiel 1 genannten.

### Beispiel 3

164 g (2 mol) wasserfreie phosphorige Säure und 1.560 g (12 mol) 2-Ethylhexanol werden in einem 3 l fassenden Dreihalskolben, der mit Rührer, Thermometer, Tropftrichter, Destillationsbrücke und Ölheizbad ausgestattet ist, vorgelegt.

Das Reaktionsgemisch wird unter Rühren erhitzt. Bei 152°C im Sumpf beginnt die Freisetzung eines Zweiphasengemisches, das aus 2-Ethylhexanol und Wasser besteht. Die Energiezufuhr wird während der gesamten Reaktionszeit konstant auf 250 Watt gehalten. Die abdestillierten Volumenanteile werden fortlaufend durch frisches 2-Ethylhexanol ersetzt.

Nach Abdestillieren des 2-Ethylhexanols von Di-(2-ethylhexyl)-phosphit bei reduziertem Druck verbleiben 594 g (97 % der Theorie) eines klaren, fast farblosen Produktes, das einen Restgehalt an 2-Ethylhexanol von 0,8 % aufweist.

Die Ausbeute an Di-(2-ethylhexyl)-phosphat nach der Weiterverarbeitung, die wie in Beispiel 1 beschrieben durchgeführt wird, beträgt 95,9 %, bezogen auf eingesetzte phosphorige Säure.

## Patentansprüche

1. Verfahren zur Herstellung von Dialkylphosphorsäuren, deren Alkylreste miteinander identisch sind und jeweils 6 bis 12 C-Atome aufweisen, dadurch gekennzeichnet, daß
a) phosphorige Säure, Phosphorigsäuremethylester, Phosphorigsäureethylester, Dimethylphosphit, Diethylphosphit oder Gemische davon, mit einem primären Alkohol, ausgewählt aus der Gruppe Hexanol, Oktanol, 2-Ethylhexanol, Dekanol und Dodekanol, im Molverhältnis 1:2,1 bis 1:10, vorzugsweise 1:4 bis 1:6, bei Siedetemperatur unter einem Druck von 0,1 bis 2 bar, vorzugsweise bei Atmosphärendruck umgesetzt werden, bis alles entstandene Wasser, Methanol und/oder Ethanol aus dem Reaktionsgemisch abdestilliert ist,
b) der als Überschuß eingesetzte Alkohol auf weniger als 10 %, vorzugsweise auf weniger als 1 % unter reduziertem Druck destillativ entfernt wird,
c) das von Alkohol befreite, gegebenenfalls destillierte Dialkylphosphit mit Chlorgas bei Temperaturen zwischen -20°C und 50°C bis zum Auftreten eines bleibenden Chlorgehalts in der Mischung, erkennbar an einer gelbgrünen Farbe der Reaktionsmischung oder einem stabilen Redoxpotential von 0,88 bis 0,91 V, umgesetzt wird,
d) der im Reaktionsprodukt gelöste Chlorwasserstoff bei Temperaturen zwischen ca. 20°C und 50°C mit einem inerten Gasstrom ausgeblasen wird,
e) das von Chlorwasserstoff befreite rohe Dialkylchlorphosphat mit Wasser bei Temperaturen zwischen 20°C und 90°C innerhalb von 0,5 bis 2 Stunden so hydrolysiert wird, daß eine nicht mehr als 10 Gew.-% HCl enthaltende wäßrige Salzsäure erzeugt wird, wobei zwei Phasen gebildet werden,
f) von den entstandenen zwei Phasen die untere, im wesentlichen aus Salzsäure bestehende Phase abgetrennt wird,
g) die obere der beiden Phasen 1 bis 6 Stunden bei 80 bis 130°C mit 1,5 bis 200 Gew.-% Wasser behandelt wird und
h) die resultierende Dialkylphosphorsäure durch Phasentrennung isoliert wird und gegebenenfalls noch weiter entwässert wird.

2. Verfahren nach Anspruch 1, dadurch gekennzeichnet, daß der primäre Alkohol 2-Ethylhexanol ist.

3. Verfahren nach Anspruch 1 oder 2, dadurch gekennzeichnet, daß das Verfahren in kontinuierlicher Weise durchgeführt wird.
